(19) Europäisches Patentamt

European Patent Office

Office européen des brevets

(11) **EP 3 208 677 A1**

(12) **EUROPEAN PATENT APPLICATION**

(43) Date of publication:
**23.08.2017 Bulletin 2017/34**

(51) Int Cl.:
***G05B 23/02*** *(2006.01)*

(21) Application number: **16156353.1**

(22) Date of filing: **18.02.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Siemens Aktiengesellschaft 80333 München (DE)**

(72) Inventors:
• **Fishkin, Alexey**
  **81737 München (DE)**
• **Latimer, Anthony**
  **Lincoln, LN6 0RH (GB)**
• **Marsden, Adam**
  **Lincoln, LN6 0BG (GB)**
• **Roshchin, Mikhail**
  **81925 München (DE)**
• **Seamer, Andrew**
  **Lincoln, LN2 2NH (GB)**

(74) Representative: **Maier, Daniel Oliver**
  **Siemens AG**
  **Postfach 22 16 34**
  **80506 München (DE)**

(54) **METHOD FOR DETECTING A FAILURE IN A TURBOMACHINE COMPONENT**

(57) A computer implemented method for detecting a failure in a turbomachine (10) comprises:
- receiving from a control system of the turbomachine (10) a demand value (DM), which represent a desired value for a variable of the turbomachine (10),
- receiving from a sensor of the turbomachine (10) a feedback value (FD), which represent an actual value for a variable of the turbomachine (10),
- calculating a difference between the feedback value (FD) and the demand value (DM),
- calculating a monitoring function (F) of the difference between the feedback value (FD) and the demand value (DM) along a sample time interval (T),
- checking if the monitoring function (F) is beyond a threshold value (L) for a predefined duration time (D),
- identifying a failure of the turbomachine (10) when the monitoring function (F) is beyond the threshold value (L) for the predefined duration time (D),
- generating a failure message.

FIG 2

**Description**

Field of invention

The present invention relates to a method for detecting a failure in a turbomachine. In particular, the present invention may relate to a method for detecting a failure in a valve or vane of a gas or steam turbine or a failure in the actuator of a valve or vane of a gas or steam turbine.

Art Background

Normally, any turbomachine is equipped with a large number of automatic valves or vanes, for example:

- Variable Guide Vanes (VGV),
- Blow-Off/Bleed Valves (BOV),
- Dry Low Emission (DLE) Bleed Valves (DLE-BV), and
- Purge Air Control Valve (PACV).

The automatic control of such vanes and valves is operated by the control system of the turbomachine through actuators. Each actuator strokes a respective valve or vane moving it to a required demand position, defined by the control system. The actual feedback position of the valve or vane is registered by one or more dedicated sensor(s).

Using data collected from the machine, i.e. the above defined demand and control values and the turbine events from the control system, a service engineer monitors the machine performance. In particular, when handling a machine trip (abnormal shutdown), the primal task of the service engineer is to figure out the failure mode (e.g. VGV or BOV or DLE-BV or PACV failure), then eliminate the failure cause (e.g. VGV or BOV or DLE-BV or PACV repair) and then start the turbine again as soon as possible, in order to minimize the outage hours.

This diagnosis activity may be performed remotely, i.e. the data collected from the machine are stored on a central server and the service engineer can browse them through a client-server software application, from a diagnosis location which may be far from the machine location. This also means that the diagnosis has to be based exclusively on the analysis of data, without the possibility, at least at a first stage, of a physical inspection of the machine. According to known-in-the-art procedures, in order to detect one of the above failures, the service engineer may proceed in two different ways:

1. he can examine the graphs of demand and feedback values valves and vanes (e.g. VGVs, BOVs, DLE-BVs and PACVs) to see whether there are some significant deviations, or
2. he can check the sequence of events from the control system written right before the turbine trip to see whether a failure event for a vane or a valve (e.g.

an event of the type: "VGV failure" or "BOV failure" or "DLE-BV failure" or "PACV failure") was registered.

Both procedures have the same main drawback: the large amount of data to be visually examined and checked by the engineer. Typically, every service engineer is responsible for a significant amount of machines, for example 20 or 30 turbines. These turbines can be from different vendors, i.e., there may be different "event text" messages meaning the "VGV/BOV/DLE-BV/PACV failures". Furthermore, the control system may either not report on these failures in general or may not recognize any VGV/BOV/DLE-BV/PACV failure, e.g. in the case when the turbine trips are due to some low oil levels. The latter means that the VGV/BOV/DLE-BV/PACV problems can only be removed after the turbine is started again and a VGV/BOV failure experienced and detected. Two machine stops, sometimes one shortly after the other, are in these cases necessary to remove all the problems.

In most turbine trip cases, according to both the above first and second procedure, the monitoring service engineer simply browses the turbine data and then visually examines the respective demand and feedback positions graphs of the valves and vanes along with the turbine events. Since the sensor data is written in one minute time intervals (but, according to possible implementation, it may be one second time intervals) and failure descriptions differ from one turbine to another, the latter process can be particularly time consuming.

It is therefore still desirable to provide a new method for detecting a failure in a turbomachine, in particular in a gas or steam turbine, to provide an automatic tool to clearly and quickly determine a failure in a component of the machine, in particular a valve failure or a vane failure or a failure in the actuator of a vane or of a valve.

It is also desirable that the component failures are reported in a uniform way throughout a plurality of machines.

Summary of the Invention

In order to achieve the object defined above, a method for detecting a failure in a turbomachine is provided in accordance to the independent claims. The dependent claims describe advantageous developments and modifications of the invention.

According to an aspect of the present invention, a computer implemented method for detecting a failure in a component of a turbomachine comprises the steps of:

- receiving from a control system of the turbomachine a demand value, which represent a desired value for a variable of the turbomachine,
- receiving from a sensor of the turbomachine a feedback value, which represent an actual state for the component,

- calculating a difference between the feedback value and the demand value,
- calculating a monitoring function of the difference between the feedback value and the demand value along a sample time interval,
- checking if the monitoring function is beyond a threshold value for a predefined duration time,
- identifying a failure of the turbomachine when the monitoring function is beyond the threshold value for the predefined duration time,
- generating a failure message.

The method of the present invention achieves the following advantages:

- it is computationally simple, i.e., it can be realized in any modern monitoring system, not requiring great computational resources;
- it can automatically recognize and report VGV/BOV/DLE-BV/PACV failures;
- it can substitute or enhance failure messages reported by the control system.

The test results show that we are able to automatically recognize and report real-life failures in a uniform way throughout a plurality of turbines.
After the failure is identified, information is made available, regarding the position and the type of failure.
According to exemplary embodiments of the present invention, the demand value represents a desired value for a state of a component of the turbomachine) and the feedback value represent an actual state for the component. The component may be a variable guide vane (VGV) or a blow-off valve (BOV) or a DLE Bleed Valves (DLE-BV) or a Purge Air Control Valve (PACV) or an actuator thereof.
Advantageously, the component which is the cause of the failure can be easily identified through the method of the present invention and be substituted, or repaired.
According to an exemplary embodiment of the present invention, the monitoring function is chosen in a group comprising:

- the simple moving average function,
- the integral function,
- the root mean square function,
- the mean squared error function,
- the exponential error function.

Advantageously, depending on the type of variable which is monitored and on the degree of promptness which is required by the response, i.e. the time within which the failure has to be diagnosed, a convenient monitoring function can be chosen.
According to other exemplary embodiments of the present invention, in the step of checking if the monitoring function is beyond a threshold value for a predefined duration time, the method may check if the monitoring function is greater or lower than a threshold value for a predefined duration time. According to exemplary embodiments of the present invention, the sample time interval may between 0,5 min and 20 min. According to exemplary embodiments of the present invention, the duration time is between 1 s and 20 s.
A convenient choice of the sample time interval and of the duration time, together with the choice of the monitoring function allows identifying correctly the failure in the turbomachine, without causing undesired false failure alarms.

Brief Description of the Drawings

The above mentioned attributes and other features and advantages of this invention and the manner of attaining them will become more apparent and the invention itself will be better understood by reference to the following description of embodiments of the invention taken in conjunction with the accompanying drawings, wherein:

FIG. 1 shows a partial longitudinal section view of the compressor section of a gas turbine engine comprising a plurality of vanes and valves, whose failures may be detected according to the method of the present invention,

FIG. 2 shows a block diagram, illustrating the method of the present invention,

FIG. 3 shows a first graph, showing a compressor component failure detected by the method of the present invention,

FIG. 4 shows a second graph, showing another compressor component failure detected by the method of the present invention,

FIG. 5 shows third graph, showing a compressor component monitored by the method of the present invention.

Detailed Description

Hereinafter, above-mentioned and other features of the present invention are described in details. Various embodiments are described with reference to the drawings, wherein the same reference numerals are used to refer to the same elements throughout. The illustrated embodiments are intended to explain, and not to limit the invention.

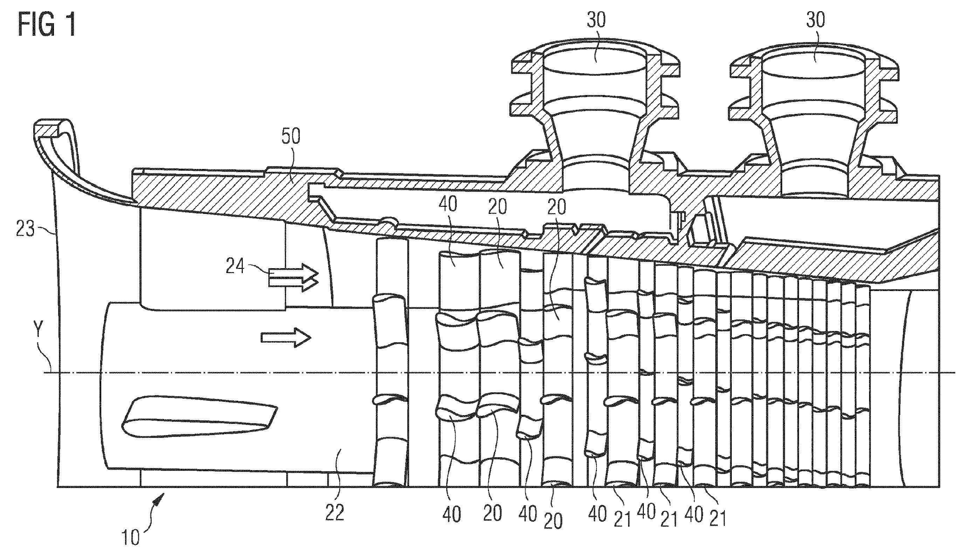

FIG. 1 shows an example of a compressor section 10 for a gas turbine engine (not shown as a whole) in a sectional view. The compressor 10 comprises a shaft 22 which is rotatable about a rotational axis Y and which extends longitudinally through the compressor 10. The shaft 22 drivingly connects the compressor section 10 of the gas turbine engine to turbine section (not shown).

In operation of the gas turbine engine, air 24 is taken in through an air inlet 23 is compressed by the compressor section 10 and delivered to a combustion section or burner section (not shown) of the gas turbine engine.

The compressor section 10 comprises an axial series of guide vane stages 20, 21 and rotor blade stages 40. The compressor section 10 also comprises a casing 50 that surrounds the rotor stages 40 and supports the vane stages 20, 21. The guide vane stages include annular arrays of radially extending vanes 20, 21 that are mounted to the casing 50. The vanes 20, 21 are provided to present gas flow at an optimal angle for the blades at a given engine operational point. Some of the guide vane stages (the first two stages of guide vanes 20 in the example of Fig. 1) have variable vanes, where a setting angle $\alpha$ of the vanes, about their own longitudinal axis, can be adjusted according to air flow characteristics that can occur at different engine operations conditions. The value of the setting angle $\alpha$ of each variable guide vane 20 around the respective setting longitudinal axis can be modified through components of the gas turbine engine 10, which are conventional and known-in-the-art and therefore not described in further detail.

On the casing 50 a plurality of blow-off valves 30 are provided for releasing excess of air during start-up or shutdown, thus relieving pressure at the air inlet 23, in order to avoid the damaging effect of surging and stalling conditions.

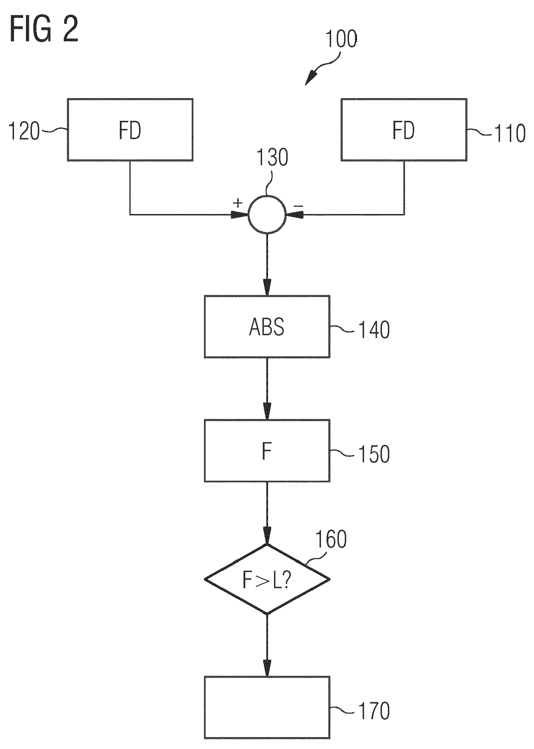

With reference to the block diagram of **FIG. 2**, a method 100 for detecting a failure in the compressor section 10 is described.

In particular, with specific reference to the variable guide vanes 20, the control system of the turbine engine 10, for each variable guide vane 20, defines a demand value DM, which represents a desirable value for the setting angle $\alpha$. The demand value DM is set depending from the desired operational condition that is imposed to the gas turbine engine 10, through the control system.

Each variable guide vane 20 is associated to or comprises an actuator (not represented in the attached figures) for moving the guide vane 20 to the demand value DM.

Each variable guide vane 20 is associated to a feedback sensor (not represented in the attached figures) for measuring a feedback value FD, which represents an actual value of the setting angle $\alpha$.

Demand values DM and feedback values FD may be use more in general referred to other components of the gas turbine engine 10.

According to another embodiment of the present invention, the demand value DM represents a desirable value for the degree of opening of a blow-off valve 30 and the feedback value FD represents an actual value of the same degree of opening. According to a further embodiment of the present invention, the demand value DM represents a desirable value for the degree of opening of a DLE Bleed Valves (not represented), and the feedback value FD represents an actual value of the same degree of opening.

According to another embodiment of the present invention, the demand value DM represents a desirable value for the degree of opening of a Purge Air Control Valve (not represented), and the feedback value FD represents an actual value of the same degree of opening.

According to other embodiments of the present invention, the demand value DM represents a desirable value for the degree of opening of a valve of the compressor 10, and the feedback value FD represents an actual value of the same degree of opening. Such valve is associated to an actuator, to move the valve towards the demand value DM, imposed by the control system. The valve is further associated to a sensor for measuring the feedback value FD.

The present invention may be used more in general to monitor any parameter controlled through the control system of the gas turbine engine 10, for example any pressure or any temperature variable for which demand values DM and feedback values FD are available.

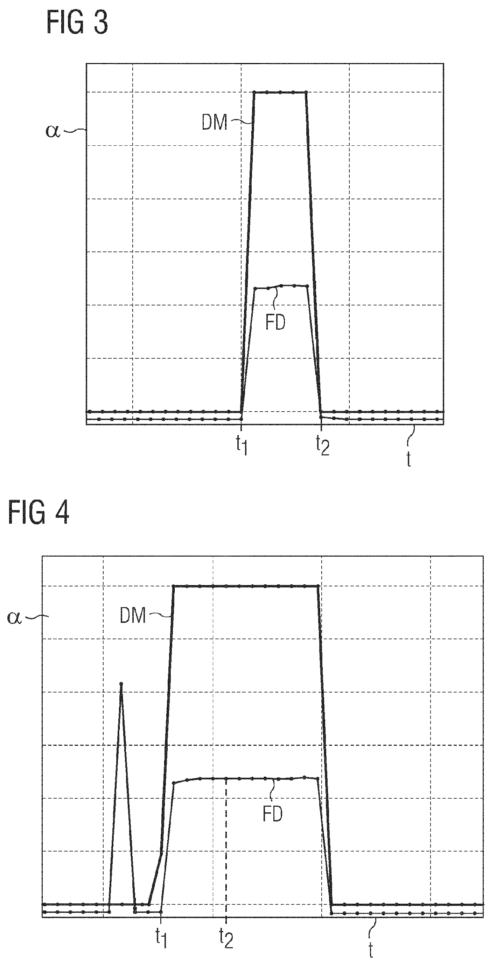

Both demand values DM and feedback values FD are in general both variable with time and can be plotted on Cartesian graphs where the demand value DM and the feedback value FD are plotted as ordinates with respect to the same abscissa time values (as shown in the attached figs. 2 and 3 for a blow-off valve 30 and in fig. 4 for a variable guide vane 20).

According to a first step 110 of the present invention, a diagnostic system receives from the control system of the turbomachine the demand value DM. According to a second step 120 the diagnostic system receives from a sensor of the compressor 10 the feedback value FD.

The diagnostic system is, according to possible embodiments of the present invention, a diagnostic computer including software implementing the method of the present invention. The diagnostic computer may be close to or remote to the compressor 10.

According to a third step 130 of the method 100, a difference between the feedback value FD and the demand value DM at the same abscissa time t is calculated. According to a fourth step 140, the method 100 includes calculating an absolute value ABS of the difference which is calculated in the third step 130.

According to a fifth step 150 of the method 100, to the value of ABS a monitoring function t F is subsequently applied during a sample time interval T:

$$F = F(ABS, T).$$

The function F is calculated at each abscissa time t, considering the sample time interval T ending at time t. According to other embodiments of the present invention, the function F is applied to the difference between the feedback value FD and the demand value DM.

The function F, according to different possible embodiments of the present invention may be:

- the simple moving average (SMA) of the absolute value ABS in the sample time interval T;
- the integral (INT) of the absolute value ABS in the sample time interval T;
- the root mean square (RMS) of the absolute value ABS in the sample time interval T;

- the mean squared error (MSE) of the feedback value FD with respect to the demand value DM in the sample time interval T. MSE represents the average, in the sample time interval T, of the squares of the differences between the feedback value FD and the demand value DM;
- the exponential error (EXP) of the absolute value ABS in the sample time interval T. EXP represents the average, in the sample time interval T, of the exponential values of ABS. The choice of the value of the sample time interval T depends from the type of signal which is being monitored, i.e. from the type of components (for example variable guide vanes or blow-off valves) and from the type of monitoring function F which is being used. For example, for variable guide vanes, a convenient value for the sample time interval T may be ten minutes when the simple moving average SMA is used as monitoring function or one minute when the integral function INT is used as monitoring function F

According to a following sixth step 160 of the method 100, the monitoring function F is compared to a maximum threshold value L:

$$F(ABS, T) > L.$$

As soon as the above relationship holds true for a predefined duration time D, the method generates a failure message, meaning that the respective variable guide vane (or other component, for example another type of valve or a vane) associated with the monitored feedback demand values FD, DM needs to be substituted or repaired. In particular, it may be necessary to substitute or repair an actuator comprised in the valve or vane or associated with it.

In general the message of error identifies the component is not able to reach the demand DM value with a sufficient degree of precision, i.e. a not negligible difference between the demand values DM and the feedback values FD. This may be due to a defect in the valve or vane itself or in its actuator. In any case the method of the present invention allows to clearly and quickly pointing to the source of the failure.

The failure message is generated in a seventh step 170 of the method 100.

Duration time D is the order of seconds and may be chosen, for example, equal to ten seconds.

According to other possible embodiments of the present invention, the threshold value L represents a minimum value, i.e. the following relationship has to be checked:

$$F(ABS, T) < L.$$

The value of the threshold L is empirical and depends from from the type of components (for example variable guide vanes or blow-off valves), from the type of monitoring function F which is being used and from the sample time interval T. Typical choices for the value of L may be:

- L = 0,3 for VGV, F=SMA and T=10 min;
- L = 30 for VGV, F=INT and T=1 min.

With reference to the graphs of **FIGS. 3** and **4**, where the feedback values FD and of the demand values DM are plotted with respect to the same abscissa time t, the results of two implementation of the method 100 are respectively shown. Feedback values FD and demand values DM refer to the opening of a blow-off valve.

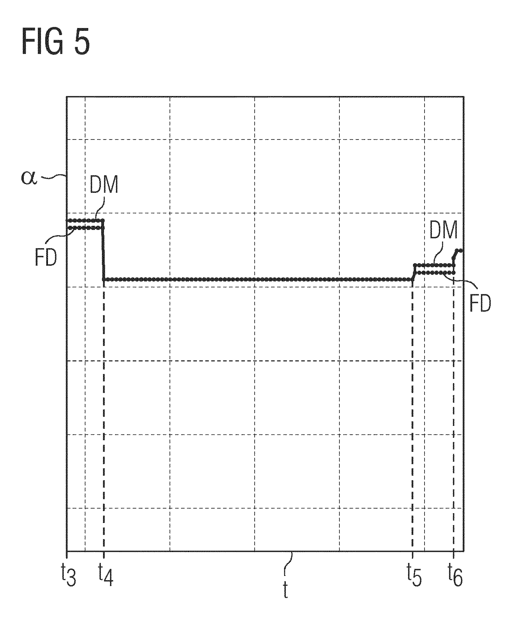

In both graphs, at a first time t1, the opening of the valve is requested, i.e. an increase of the demand values DM is shown. Concurrently, also the feedback values FD increases, but a difference between the two curves representing the demand values DM and the feedback values FD is evident in the interval of time t1-t2. In particular, the value of the monitoring function F calculated for such difference and for a sample time interval T, is greater than a predefined threshold L. As the interval of time t1-t2 corresponds to the duration time D, at time t2 a failure message is generated. With reference to the similar graph of **FIG. 5**, differences between feedback values FD and demand values DM are shown at the two intervals of time t3-t4 and t5-t6. In such cases, however, a failure message was not generated, either because the value of the monitoring function F calculated for such difference and for a sample time interval T, was lower than a predefined threshold L, or because the feedback values FD reaches the demand values DM (respectively at time t4 and t6) before the duration time D has expired.

**Claims**

1. A computer implemented method for detecting a failure in a turbomachine (10) comprising the steps of:

- receiving from a control system of the turbomachine (10) a demand value (DM), which represent a desired value for a variable of the turbomachine (10),
- receiving from a sensor of the turbomachine (10) a feedback value (FD), which represent an actual value for the variable of the turbomachine (10),
- calculating a difference between the feedback value (FD) and the demand value (DM),
- calculating a monitoring function (F) of the difference between the feedback value (FD) and the demand value (DM) along a sample time interval (T),
- checking if the monitoring function (F) is beyond a threshold value (L) for a predefined duration time (D),
- identifying a failure of the turbomachine (10) when the monitoring function (F) is beyond the threshold value (L) for the predefined duration time (D),
- generating a failure message.

2. The computer implemented method according to claim 1, wherein the demand value (DM) represents a desired value for a state of a component (20, 30) of the turbomachine (10) and the feedback value (FD) represent an actual state for the component (20, 30).

3. The computer implemented method according to claim 2, wherein the component (20, 30) is a variable guide vane (20) or a blow-off valve (30) or a DLE bleed valves or a purge air control valve.

4. The computer implemented method according to claim 2, wherein the component is an actuator of a valve or of a vane of the turbomachine (10).

5. The computer implemented method according to any of the preceding claims, wherein the monitoring function (F) is chosen in a group comprising:

    - simple moving average (SMA) function,
    - integral (INT) function,
    - root mean square (RMS) function,
    - mean squared error (MSE) function,
    - exponential error (EXP) function.

6. The computer implemented method according to any of the preceding claims, wherein the monitoring function (F) is applied to an absolute value (ABS) of the difference between the feedback value (FD) and the demand value (DM).

7. The computer implemented method according to any of the preceding claims, wherein the method comprises the step of checking if the monitoring function (F) is greater than a threshold value (L) for a predefined duration time (D).

8. The computer implemented method according to any of the preceding claims 1 to 6, wherein the method comprises the step of checking if the monitoring function (F) is lower than a threshold value (L) for a predefined duration time (D).

9. The computer implemented method according to any of the preceding claims, wherein the sample time interval (T) is between 0,5 min and 20 min.

10. The computer implemented method according to any of the preceding claims, wherein the duration time (D) is between 1 s and 20 s.

11. The computer implemented method according to any of the preceding claims, wherein the turbomachine (10) is a steam or gas turbine machine.

FIG 1

EP 3 208 677 A1

FIG 2

FIG 3

FIG 4

FIG 5

Europäisches
Patentamt

European
Patent Office

Office européen
des brevets

# EUROPEAN SEARCH REPORT

Application Number

EP 16 15 6353

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 762 917 A1 (FANUC LTD [JP]) 14 March 2007 (2007-03-14) | 1-4,6-10 | INV. G05B23/02 |
| Y | * paragraph [0007] - paragraph [0008] * <br> * paragraph [0022] * <br> * paragraph [0030] - paragraph [0033] * | 5 | |
| X | US 2009/133951 A1 (SCHULTZ ERIC J [US] ET AL) 28 May 2009 (2009-05-28) <br> * paragraph [0026] - paragraph [0027] * <br> * paragraph [0029] * <br> * paragraph [0033] * <br> * paragraph [0042] * <br> * paragraph [0044] - paragraph [0045] * | 1-4,6-10 | |
| X | EP 1 619 367 A1 (FORD GLOBAL TECH LLC [US]) 25 January 2006 (2006-01-25) <br> * paragraph [0013] * <br> * paragraph [0024] * <br> * paragraph [0028] * <br> * paragraph [0022] * <br> * paragraph [0025] * | 1-4,6-10 | |
| Y | US 2006/064182 A1 (FORD FERRILL E JR [US] ET AL) 23 March 2006 (2006-03-23) <br> * paragraph [0044]; figure 2 * | 5 | TECHNICAL FIELDS SEARCHED (IPC) <br><br> G05B |
| A | US 2014/214302 A1 (PARIKH CHIRAG BIPINCHANDRA [US] ET AL) 31 July 2014 (2014-07-31) <br> * paragraph [0037] - paragraph [0041] * | 3,4 | |

The present search report has been drawn up for all claims

| Place of search | Date of completion of the search | Examiner |
|---|---|---|
| The Hague | 14 September 2016 | Kelperis, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.....................................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 15 6353

This annex lists the patent family members relating to the patent documents cited in the above-mentioned European search report.
The members are as contained in the European Patent Office EDP file on
The European Patent Office is in no way liable for these particulars which are merely given for the purpose of information.

14-09-2016

| Patent document cited in search report | | Publication date | Patent family member(s) | | Publication date |
|---|---|---|---|---|---|
| EP 1762917 | A1 | 14-03-2007 | CN | 1928745 A | 14-03-2007 |
| | | | EP | 1762917 A1 | 14-03-2007 |
| | | | JP | 4109280 B2 | 02-07-2008 |
| | | | JP | 2007072879 A | 22-03-2007 |
| | | | US | 2007052383 A1 | 08-03-2007 |
| US 2009133951 | A1 | 28-05-2009 | CN | 101878145 A | 03-11-2010 |
| | | | DE | 112008003174 T5 | 14-10-2010 |
| | | | JP | 2011504982 A | 17-02-2011 |
| | | | RU | 2010126176 A | 10-01-2012 |
| | | | US | 2009133951 A1 | 28-05-2009 |
| | | | WO | 2009070268 A1 | 04-06-2009 |
| EP 1619367 | A1 | 25-01-2006 | NONE | | |
| US 2006064182 | A1 | 23-03-2006 | CN | 101014916 A | 08-08-2007 |
| | | | EP | 1792241 A1 | 06-06-2007 |
| | | | JP | 4625845 B2 | 02-02-2011 |
| | | | JP | 2008513879 A | 01-05-2008 |
| | | | US | 2006064182 A1 | 23-03-2006 |
| | | | WO | 2006036314 A1 | 06-04-2006 |
| US 2014214302 | A1 | 31-07-2014 | AU | 2014200363 A1 | 14-08-2014 |
| | | | CN | 103967655 A | 06-08-2014 |
| | | | DE | 102014101028 A1 | 31-07-2014 |
| | | | US | 2014214302 A1 | 31-07-2014 |

EPO FORM P0459

For more details about this annex : see Official Journal of the European Patent Office, No. 12/82